(19)

Europäisches
Patentamt
European
Patent Office
Office européen
des brevets

(11)  **EP 4 230 592 A1**

(12)  # EUROPEAN PATENT APPLICATION

published in accordance with Art. 153(4) EPC

(43) Date of publication:
**23.08.2023  Bulletin 2023/34**

(21) Application number: **21894377.7**

(22) Date of filing: **13.10.2021**

(51) International Patent Classification (IPC):
**C03B 37/083** (2006.01)   **D01D 4/02** (2006.01)

(52) Cooperative Patent Classification (CPC):
**C03B 37/083; D01D 4/02**

(86) International application number:
**PCT/JP2021/037804**

(87) International publication number:
**WO 2022/107503 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2020  JP 2020192759**

(71) Applicant: **Nippon Electric Glass Co., Ltd.
Otsu-shi, Shiga 520-8639 (JP)**

(72) Inventors:
• **TAKIMOTO Hiroshi**
  **Otsu-shi, Shiga 520-8639 (JP)**
• **MORI Hirotaka**
  **Otsu-shi, Shiga 520-8639 (JP)**

(74) Representative: **Isarpatent
Patent- und Rechtsanwälte Barth
Charles Hassa Peckmann & Partner mbB
Friedrichstrasse 31
80801 München (DE)**

(54)  **BUSHING AND METHOD FOR PRODUCING GLASS FIBER**

(57)  The present invention addresses the problem of providing a bushing that allows molten glass to be stably drawn out from nozzles provided in a small-sized base plate, and a method for producing glass fiber. A bushing (11) is configured to satisfy the following relations (1) to (6): $y1 \leq Y \leq y2$ (1), $y1 = 4/3 \times X + 3$ (2), $y2 = 4/3 \times X + 8$ (3), $X = D1^4/Lt$ (4), $Y = A3 - (A1 + A2)$ (5), and $A3 = L1 \times L2$ (6), where, for first nozzles (N1) and second nozzles (N2) in the bushing (11), D1 is a nozzle hole inner diameter [mm], Lt is a nozzle flow path length [mm], A1 is a nozzle hole cross-sectional area [mm$^2$], A2 is a nozzle wall cross-sectional area [mm$^2$], L1 is an interval [mm] between the centers of adjacent first nozzles and an interval [mm] between the centers of adjacent second nozzles, and L2 is an interval [mm] between the centers of adjacent first and second nozzles.

FIG. 2

EP 4 230 592 A1

**Description**

Technical Field

The present invention relates to a bushing and a method for producing glass fiber.

Background Art

As disclosed in Patent Document 1, bushings including a base plate and a plurality of nozzles provided at a bottom surface of the base plate are used for producing glass fiber.

Citation List

Patent Literature

Patent Document 1: JP 2015-231926 A

Summary of Invention

Technical Problem

In the bushings as described above, from the viewpoint of reducing the amount of material used for the base plate, the base plate has been reduced in size by arranging adjacent nozzles closer to each other. However, with such small-sized bushings, molten glass that flows out from the nozzles tends to adhere between adjacent nozzles or the like. When the molten glass adheres between adjacent nozzles or the like, it becomes difficult to stably draw out the molten glass from the nozzles, and for example, glass filaments are more likely to break.
An object of the present invention is to provide a bushing that allows molten glass to be stably drawn out from nozzles provided in a small-sized base plate, and a method for producing glass fiber.

Solution to Problem

A bushing to solve the above problem includes a base plate and a nozzle group provided at a bottom surface of the base plate. The nozzle group includes a first nozzle row in which a plurality of first nozzles are aligned and a second nozzle row in which a plurality of second nozzles are aligned, the second nozzle row being arranged adjacent to the first nozzle row. The bushing is configured to satisfy the following relations (1) to (6) where, for each of the plurality of first nozzles and the plurality of second nozzles, D1 is a nozzle hole inner diameter [mm], Lt is a nozzle flow path length [mm], A1 is a nozzle hole cross-sectional area [mm$^2$], A2 is a nozzle wall cross-sectional area [mm$^2$], L1 is an interval [mm] between the centers of adjacent first nozzles in the first nozzle row and an interval [mm] between the centers of adjacent second nozzles in the second nozzle row, and L2 is an interval [mm] between the center of the first nozzle row in a row width direction and the center of the second nozzle row in the row width direction.

$$y1 \leq Y \leq y2 \quad \cdots \text{ (1)}$$

$$y1 = 4/3 \times X + 3 \quad \cdots \text{ (2)}$$

$$y2 = 4/3 \times X + 8 \quad \cdots \text{ (3)}$$

$$X = D1^4/Lt \quad \cdots \text{ (4)}$$

$$Y = A3 - (A1 + A2) \quad \cdots \text{ (5)}$$

$$A3 = L1 \times L2 \quad \cdots \text{ (6)}$$

According to this configuration, since Y is equal to or greater than y1, a space around the nozzle can be suitably secured in accordance with the outlet velocity of the molten glass flowing out from the nozzle. Thus, adhesion of the molten glass, flowing out from the nozzle, between adjacent nozzles or the like can be suppressed. In addition, since Y is equal to or less than y2, the space around the nozzle does not become excessively large with respect to the outlet velocity of the molten glass flowing out from the nozzle. Thus, an increase in the production cost of the bushing can be suppressed.

The bushing is preferably configured to further satisfy the following relation (7).

$$0.2 \le X \le 3.0 \quad \square\square\square \ (7)$$

According to this configuration, the molten glass can be more stably drawn out from the nozzles.

In the bushing, a mean value of arithmetic mean roughnesses Ra at an inner surface of a nozzle hole of each of the plurality of first nozzles and the plurality of second nozzles is preferably 2 $\mu$m or less. According to this configuration, the outlet velocity of the molten glass flowing out from the nozzle can be made further uniform. Thus, adhesion of the molten glass, flowing out from the nozzle, between adjacent nozzles or the like can be suppressed.

A method for producing glass fiber includes supplying molten glass to a bushing, drawing out a plurality of glass filaments from the bushing, and then gathering the plurality of glass filaments into a strand. The bushing includes a base plate and a nozzle group provided at a bottom surface of the base plate. The nozzle group includes a first nozzle row in which a plurality of first nozzles are aligned and a second nozzle row in which a plurality of second nozzles are aligned, the second nozzle row being arranged adjacent to the first nozzle row. The foregoing relations (1) to (6) are satisfied where, for each of the plurality of first nozzles and the plurality of second nozzles, D1 is a nozzle hole inner diameter [mm], Lt is a nozzle flow path length [mm], A1 is a nozzle hole cross-sectional area [mm$^2$], and A2 is a nozzle wall cross-sectional area [mm$^2$], L1 is an interval [mm] between the centers of adjacent first nozzles in the first nozzle row and an interval [mm] between the centers of adjacent second nozzles in the second nozzle row, and L2 is an interval [mm] between the center of the first nozzle row in a row width direction and the center of the second nozzle row in the row width direction.

Advantageous Effects of Invention

According to the present invention, molten glass can be stably drawn out from nozzles provided in a small-sized base plate.

Brief Description of Drawings

FIG. 1 is a schematic diagram illustrating a glass fiber producing apparatus according to an embodiment.
FIG. 2 is a bottom view of part of a bushing.
FIG. 3 is a partial cross-sectional view taken along the line 3-3 in FIG. 2.
FIG. 4 is a graph showing a relationship between parameters relating to dimensions of a nozzle and parameters relating to arrangement of the nozzles.

Description of Embodiments

An embodiment of a bushing and a method for producing glass fiber will be described below with reference to the accompanying drawings.

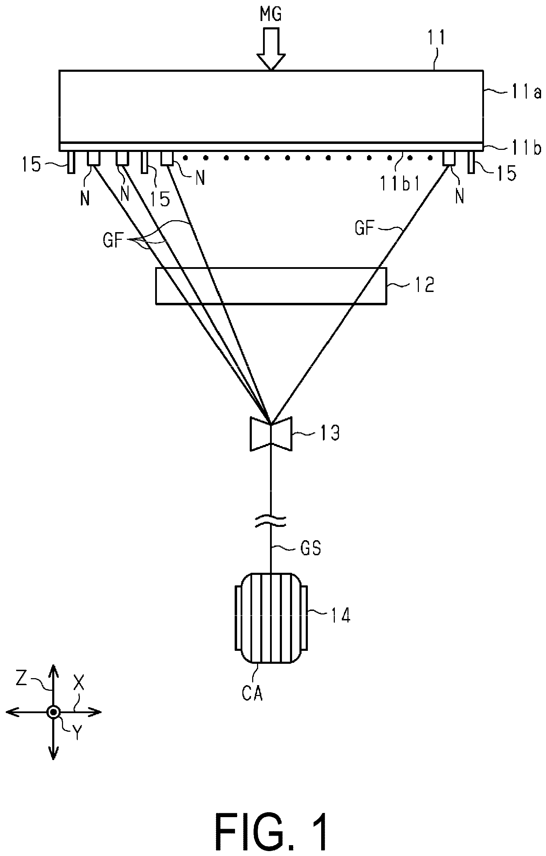

As illustrated in FIG. 1, a bushing 11 is used for producing glass fiber (glass strand GS). A glass fiber producing apparatus includes the bushing 11, an applicator 12 for sizing a large number of glass filaments GF drawn out from the bushing 11, and a gathering shoe 13 for gathering the large number of sized glass filaments GF into a strand. The large number of glass filaments GF are gathered by the gathering shoe 13 to obtain a glass strand GS. The glass fiber producing apparatus includes a collet 14 for winding the glass strand GS. The glass strand GS is wound around the collet 14 to obtain a cake CA. Although not illustrated, the glass fiber producing apparatus includes a traverse for reciprocating the glass strand GS.

The bushing 11 includes a bushing body 11a to which molten glass MG is supplied, and a base plate 11b provided at a bottom of the bushing body 11a. Although not illustrated, the bushing body 11a includes a supply port through which the molten glass MG is supplied, a screen for suppressing deposition of foreign matter on the base plate 11b, and a terminal for resistance heating.

The bushing 11 includes a nozzle group provided at a bottom surface 11b1 of the base plate 11b. The molten glass MG is supplied to the nozzles N, and glass filaments GF are drawn out from the nozzles N. The number of nozzles is preferably 800 to 10000, and more preferably 2000 to 8000. In the figure, the nozzle group of the bushing 11 is illustrated in a simplified manner.

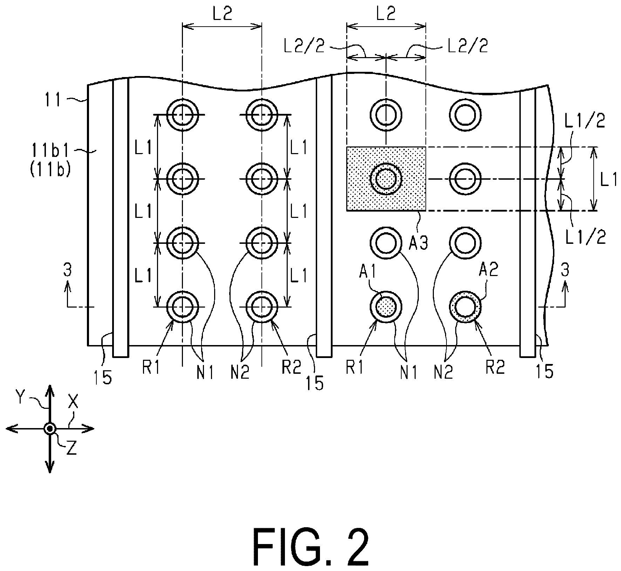

As illustrated in FIG. 2, the nozzle group of the bushing 11 includes a first nozzle row R1 in which a plurality of first nozzles N1 are aligned and a second nozzle row R2 in which a plurality of second nozzles N2 are aligned. The second nozzle row R2 is arranged adjacent to the first nozzle row R1. Specifically, an alignment direction of the plurality of first nozzles N1 and the plurality of second nozzles N2 is a horizontal direction along the Y-axis direction in FIG. 2. The first nozzle row R1 and the second nozzle row R2 are arranged adjacent to each other horizontally along the X-axis direction orthogonal to the Y-axis direction in FIG. 2.

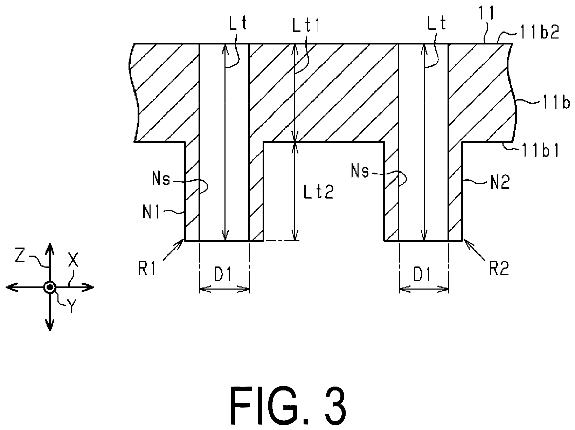

As illustrated in FIGS. 2 and 3, for each of the first nozzles N1 and the second nozzles N2, a nozzle hole inner diameter [mm] is represented by D1, a nozzle flow path length [mm] is represented by Lt, a nozzle hole cross-sectional area [mm$^2$] is represented by A1, and a nozzle wall cross-sectional area [mm$^2$] is represented by A2. The first nozzles N1 and the second nozzles N2 have flow paths extending in the vertical direction along the Z-axis direction in FIGS. 2 and 3.

As illustrated in FIG. 3, the nozzle flow path length Lt is a length from an upper surface 11b2 of the base plate 11b to a tip of the nozzle N. That is, the nozzle flow path length Lt [mm] is a sum of a thickness Lt1 [mm] of the base plate 11b and a length Lt2 [mm] from the bottom surface 11b1 of the base plate 11b to the tip of the nozzle N. The nozzle hole cross-sectional area A1 [mm$^2$] and the nozzle wall cross-sectional area A2 [mm$^2$] are horizontal cross-sectional areas of the nozzle N as indicated by dotted patterns in FIG. 2. In the present embodiment, the nozzle hole cross-sectional area A1 is constant over the entire nozzle flow path length Lt for each nozzle N, and the nozzle wall cross-sectional area A2 is constant over the entire length of each nozzle N. A cross-sectional shape of the nozzle hole is circular, and the glass filament GF having a circular cross-section is drawn out from the nozzle hole.

The bushing 11 is configured to satisfy the following relations (1) to (6).

$$y1 \leq Y \leq y2 \qquad (1)$$

$$y1 = 4/3 \times X + 3 \qquad (2)$$

$$y2 = 4/3 \times X + 8 \qquad (3)$$

$$X = D1^4/Lt \qquad (4)$$

$$Y = A3 - (A1 + A2) \qquad (5)$$

$$A3 = L1 \times L2 \qquad (6)$$

Here, L1 represents an interval [mm] between the centers of adjacent first nozzles N1 in the first nozzle row R1 and an interval [mm] between the centers of adjacent second nozzles N2 in the second nozzle row R2. L2 represents an interval [mm] between the center of the first nozzle row R1 in a row width direction and the center of the second nozzle row R2 in the row width direction. In other words, L2 represents an interval [mm] between the center of one of the first nozzles N1 and the center of the second nozzle N2 located closest to this nozzle N1, that is, the interval [mm] between the centers of the first nozzle N1 and the second nozzle N2 adjacent to each other. A straight line passing through the center of the first nozzle row R1 in the row width direction and a straight line passing through the center of the second nozzle row R2 in the row width direction are parallel. The row width direction of the first nozzle row R1 is a direction parallel to the bottom surface 11b1 of the base plate 11b and orthogonal to the alignment direction of the first nozzles N1, and coincides with the X-axis direction, for example, in FIGS. 2 and 3. The row width direction of the second nozzle row R2 is a direction parallel to the bottom surface 11b1 of the base plate 11b and orthogonal to the alignment direction of the second nozzles N2, and coincides with the X-axis direction, for example, in FIGS. 2 and 3.

The relation (4) above is an equation for obtaining a numerical value representing the degree of outlet velocity of the molten glass MG flowing out from the nozzle N. The larger the nozzle hole inner diameter D1, the faster the outlet velocity of the molten glass MG. On the other hand, the shorter the nozzle flow path length Lt, the faster the outlet velocity of the molten glass MG.

The relation (5) above is an equation for obtaining a value representing a size of a space around one nozzle N. Specifically, each nozzle arrangement area A3 indicated by the dotted pattern in FIG. 2, that is, an area of one nozzle N and the space around the nozzle N in a bottom view of the bushing 11 can be obtained by the relation (6) above. In the relation (5), the area of the space around one nozzle N can be obtained by subtracting the nozzle hole cross-sectional area A1 and the nozzle wall cross-sectional area A2 from the nozzle arrangement area A3.

The nozzle hole inner diameter D1 [mm] is, for example, preferably in a range of 0.5 mm or more and 3.0 mm or less, and more preferably in a range of 0.8 mm or more and 2.0 mm or less. The nozzle flow path length Lt [mm] is preferably in a range of 1.5 mm or more and 8.0 mm or less, and more preferably in a range of 2.5 mm or more and 6.0 mm or less. The nozzle hole cross-sectional area A1 [mm$^2$] is preferably in a range of 0.2 mm$^2$ or more and 7.0 mm$^2$ or less, and more preferably in a range of 0.5 mm$^2$ or more and 5.0 mm$^2$ or less. The nozzle wall cross-sectional area A2 [mm$^2$] is preferably in a range of 0.6 mm$^2$ or more and 4.9 mm$^2$ or less, and more preferably in a range of 0.8 mm$^2$ or more and 3.5 mm$^2$ or less.

The bushing 11 is preferably configured to further satisfy the following relation (7), for example, from the viewpoint of more stably drawing out the molten glass MG from the nozzles N.

$$0.2 \leq X \leq 3.0 \quad \square\square\square \ (7)$$

A mean value of arithmetic mean roughnesses Ra at an inner surface Ns of the nozzle hole of each of the first nozzles N1 and the second nozzles N2 is preferably 2 μm or less. This mean value of the arithmetic mean roughnesses Ra is more preferably 0.1 μm or more, and still more preferably in a range of 0.3 μm or more and 1.5 μm or less.

The mean value of the arithmetic mean roughnesses Ra at the inner surface Ns of the nozzle hole can be adjusted by a shape of a drill used for drilling the nozzle hole or vibration of the drill. The mean value of the arithmetic mean roughnesses Ra at the inner surface Ns of the nozzle hole can also be adjusted by bringing a drill into contact with the inner surface Ns of the nozzle hole or annealing the inner surface Ns of the nozzle hole.

The mean value of the arithmetic mean roughnesses Ra is a value in an unused state before the molten glass MG is caused to flow. The mean value of the arithmetic mean roughnesses Ra can be measured as follows.

First, a plurality of nozzles N are manufactured under the same manufacturing conditions, and then a nozzle N to be measured is extracted as a sample from the plurality of nozzles N. Subsequently, the extracted sample is cut along a direction in which a hole axis of the nozzle hole extends (the direction corresponding to the Z-axis direction in the bushing 11). Subsequently, the arithmetic mean roughness Ra of the inner surface Ns of the nozzle hole is measured along the direction in which the hole axis extends in accordance with JIS B 0601:2001.

For the measurement of the arithmetic mean roughness Ra, Surfcoder (manufactured by Kosaka Laboratory Ltd., product name: ET4000) is used. The measurement distance is 1 mm. The arithmetic mean roughness Ra is measured at six different positions.

Subsequently, a mean value of the arithmetic mean roughnesses Ra measured at the six positions is taken as the mean value of the arithmetic mean roughnesses Ra of the inner surface Ns. The nozzles N other than the sample for which the arithmetic mean roughnesses Ra were measured are regarded as having the same mean value as the mean value of the arithmetic mean roughnesses Ra in the sample.

The bushing 11 of the present embodiment further includes a plurality of cooling members 15 provided at the bottom surface 11b1 of the base plate 11b. The cooling members 15 cool the molten glass MG drawn out from the nozzles N. Examples of the cooling member 15 include a cooling fin and a cooling pipe having a flow path through which a cooling medium flows.

Each cooling member 15 has a longitudinal direction and is arranged extending along the first nozzle row R1 and the second nozzle row R2. The plurality of cooling members 15 are arranged at predetermined intervals. In the bushing 11 of the present embodiment, two nozzle rows, the first nozzle row R1 and the second nozzle row R2, are arranged between the adjacent cooling members 15. But three or more nozzle rows may be arranged between the adjacent cooling members 15.

Examples of materials for the bushing body 11a, the base plate 11b, the nozzles N, and the cooling members 15 include noble metals and noble metal alloys. The noble metal is gold, silver, platinum, palladium, rhodium, iridium, ruthenium, or osmium. The materials for the bushing body 11a, the base plate 11b, the nozzles N, and the cooling members 15 are preferably platinum or a platinum alloy from the viewpoint of enhancing durability. Examples of the platinum alloy include a platinumrhodium alloy.

Next, a method for producing glass fiber will be described.

In the method for producing glass fiber, the glass strand GS is produced by supplying the molten glass MG to the bushing 11 described above, drawing out the plurality of glass filaments GF from the bushing 11, and then gathering the plurality of glass filaments GF into a strand.

The viscosity of the molten glass MG at the forming temperature at which the glass filaments GF are formed is preferably in a range of from $10^{2.0}$ to $10^{3.5}$ dPa·s, and more preferably in a range of from $10^{2.5}$ to $10^{3.3}$ dPa·s. Here, the viscosity of the molten glass MG refers to the viscosity of the molten glass at a position where the molten glass flows into the nozzles N.

Examples of the form of the glass fiber include the cake CA in which the glass strand GS is wound. The glass strand GS can be used as, for example, chopped strands cut to a predetermined length, milled fibers, rovings, yarns, mats, fabrics, tapes, or braided fabrics. Examples of applications of the glass fiber include vehicle applications, electronic material applications, building material applications, civil engineering applications, aircraft-related applications, shipbuilding applications, logistics applications, industrial machinery applications, and daily necessities applications.

Next, the actions and effects of the present embodiment will be described.

(1) The faster the outlet velocity of the molten glass MG flowing out from the nozzles N and the smaller the space around the nozzle N, the easier it is for the molten glass MG flowing out from the nozzles N to adhere between the adjacent nozzles N or the like. Here, the bushing 11 of the present embodiment is configured to satisfy the foregoing relations (1) to (6). That is, in the bushing 11 of the present embodiment, since Y is equal to or greater than y1, the space around the nozzle N can be suitably secured in accordance with the outlet velocity of the molten glass MG flowing out from the nozzle N. Thus, adhesion of the molten glass MG, flowing out from the nozzle N, between the adjacent nozzles N or the like can be suppressed. In the bushing 11 of the present embodiment, since Y is equal to or less than y2, the space around the nozzle N does not become excessively large with respect to the outlet velocity of the molten glass MG flowing out from the nozzle N. Thus, an increase in the production cost of the bushing 11 can be prevented. Therefore, the molten glass MG can be stably drawn out from the nozzles N provided in the small-sized base plate 11b. This can, for example, reduce the occurrence of breakage of the glass filament GF.

(2) The bushing 11 is preferably configured to further satisfy the foregoing relation (7). In this case, the molten glass MG can be more stably drawn out from the nozzles N.

(3) In the bushing 11, the mean value of the arithmetic mean roughnesses Ra at the inner surface Ns of the nozzle hole of each of the first nozzles N1 and the second nozzles N2 is preferably 2 μm or less. In this case, the outlet velocity of the molten glass MG flowing out from the nozzle N can be made further uniform. Thus, adhesion of the molten glass MG, flowing out from the nozzle N, between the adjacent nozzles N or the like can be further suppressed. Therefore, the molten glass MG can be more stably drawn out from the nozzles N provided in the small-sized base plate 11b.

Modifications

The above embodiment can be implemented with the following modifications. The above embodiment and the following modifications can be implemented in combination within a technically consistent range.

· The cooling members 15 of the bushing 11 may be omitted.
· In the bushing 11, the nozzle hole inner diameters of the nozzles N, the plurality of first nozzles N1 and the plurality of second nozzles N2, may be the same or different from each other. When the nozzle hole inner diameters of the nozzles N are different from each other, a mean value of the nozzle hole inner diameters can be used as the nozzle hole inner diameter D1 [mm] in the foregoing relation (4).
· In the bushing 11, when Y in the relation (1) is equal to or less than y2, Y may further be equal to or less than y2a represented by the following equation (8), or equal to or less than y2b represented by the following equation (9).

$$y2a = 4/3 \times X + 7 \quad \Box\Box\Box \ (8)$$

$$y2b = 4/3 \times X + 5 \quad \Box\Box\Box \ (9)$$

· In the bushing 11, the flow path lengths of the nozzles N, the plurality of first nozzles N1 and the plurality of second nozzles N2, may be the same or different from each other. When the flow path lengths of the nozzles N are different from each other, a mean value [mm] of the flow path lengths of the nozzles N can be used as Lt in the foregoing relation (4).
· In the bushing 11, the nozzle hole cross-sectional areas of the nozzles N, the plurality of first nozzles N1 and the plurality of second nozzles N2, may be the same or different from each other. When the nozzle hole cross-sectional areas of the nozzles N are different from each other, a mean value of the nozzle hole cross-sectional areas [mm$^2$] can be used as A1 in the foregoing relation (5).

· In the bushing 11, the nozzle wall cross-sectional areas of the nozzles N, the plurality of first nozzles N1 and the plurality of second nozzles N2, may be the same or different from each other. When the nozzle wall cross-sectional areas of the nozzles N are different from each other, a mean value of the nozzle wall cross-sectional areas [mm$^2$] can be used as A2 in the foregoing relation (5).

· The intervals between the centers of the first nozzles N1 may be the same or different from each other. When the intervals between the centers of the first nozzles N1 are different from each other, a mean value calculated from the interval [mm] between the centers of the first nozzles N1 and the interval [mm] between the centers of the second nozzles N2 can be used as L1 in the foregoing relation (6).

· The intervals between the centers of the second nozzles N2 may be the same or different from each other. When the intervals between the centers of the second nozzles N2 are different from each other, a mean value calculated from the interval [mm] between the centers of the second nozzles N2 and the interval [mm] between the centers of the first nozzles N1 can be used as L1 in the foregoing relation (6).

· A mean value of the intervals between the centers of the first nozzles N1 and a mean value of the intervals between the centers of the second nozzles N2 may be the same or different from each other. When the mean value of the intervals between the centers of the first nozzles N1 and the mean value of the intervals between the centers of the second nozzles N2 are different from each other, a mean value calculated from the intervals [mm] between the centers of the first nozzles N1 and the intervals [mm] between the centers of the second nozzles N2 can be used as L1 in the foregoing relation (6).

· In the bushing 11 of the above embodiment, each first nozzle N1 and each second nozzle N2 are arranged such that the center of each first nozzle N1 and the center of each second nozzle N2 are positioned on a straight line orthogonal to the alignment direction of the first nozzles N1 and the second nozzles N2 in the bottom view of the bushing 11. The arrangement of each first nozzle N1 and each second nozzle N2 is not limited to this arrangement. Each first nozzle N1 and each second nozzle N2 may be arranged such that either the center of each first nozzle N1 or the center of each second nozzle N2 is positioned offset from the straight line orthogonal to the alignment direction of the first nozzles N1 and the second nozzles N2 in the bottom view of the bushing 11.

· In the first nozzle row R1 of the bushing 11 of the above embodiment, the first nozzles N1 are arranged such that the centers of the first nozzles N1 are positioned on one straight line in the bottom view of the bushing 11. The arrangement of the first nozzles N1 is not limited to this arrangement. When not all the centers of the first nozzles N1 can be positioned on one straight line in the first nozzle row R1, the straight line may be set so that the sum of the intervals between the straight line and the centers of the first nozzles N1 is minimized.

· In the second nozzle row R2 of the bushing 11 of the above embodiment, the second nozzles N2 are arranged such that the centers of the second nozzles N2 are positioned on one straight line in the bottom view of the bushing 11. The arrangement of the second nozzles N2 is not limited to this arrangement. When not all the centers of the second nozzles N2 can be positioned on one straight line in the second nozzle row R2, the straight line may be set so that the sum of the intervals between the straight line and the centers of the second nozzles N2 is minimized.

· In the bushing 11 of the above embodiment, the straight line passing through the center of the first nozzle row R1 in the row width direction and the straight line passing through the center of the second nozzle row R2 in the row width direction are parallel, but these straight lines do not have to be parallel. However, in the bushing 11, the straight line passing through the center of the first nozzle row R1 in the row width direction should not intersect with the straight line passing through the center of the second nozzle row R2 in the row width direction. In this case, L2 represents an interval [mm] between the line passing through the center of the first nozzle row R1 in the row width direction and the line passing through the center of the second nozzle row R2 in the row width direction.

Next, examples and comparative examples will be described.

Examples 1 to 50

In Examples 1 to 50, glass fibers were produced using bushings having the values of X and the values of Y shown in Tables 1 and 2. The number of nozzles of the bushing is 100. The mean value of the arithmetic mean roughnesses Ra at the inner surface of the nozzle hole is 1.5 μm. The viscosity of the molten glass at the forming temperature at which the glass filaments are formed is $10^{3.0}$ dPa·s. The velocity at which the glass filaments are formed is in a range of 800 [m/min] or more and 3000 [m/min] or less.

Comparative Examples 1 to 16

In Comparative Examples 1 to 16, glass fibers were produced in the same manner as in Examples 1 to 50, except that bushings having the values of X and the values of Y shown in Table 3 were used.

Productivity of Glass Fiber

Glass strands were produced continuously for 30 days using the bushings of Examples 1 to 50 and the bushings of Comparative Examples 1 to 16. For the production of glass fibers for 30 days, the productivity of the glass fiber was evaluated using the following evaluation criteria. The evaluation results are shown in Tables 1 to 3.

When the average number of times of glass filament breakage is 10 times/day or less: (A) Productivity is high.

When the average number of times of glass filament breakage is more than 10 times/day but no more than 30 times/day: (B) Productivity is slightly low.

When the average number of times of glass filament breakage exceeds 30 times/day: (C) Productivity is low.

Effect of Reduced Material Usage

For the bushings of all examples, the bushings in which Y represented by the relation (1) was equal to or less than y2 were evaluated as having the effect of reducing the amount of the material used for the base plate (Good), and the bushings in which Y represented by the relation (1) exceeded y2 were evaluated as having no effect of reducing the amount of the material used for the base plate (Poor). The results are shown in Tables 1 to 3.

[Table 1]

| | Bushing | | Evaluation result | |
|---|---|---|---|---|
| | $X = D1^4/Lt$ | $Y = A3 - (A1 + A2)$ | Productivity of glass fiber | Reduced material usage |
| Example 1 | 0.33 | 5.84 | A | Good |
| Example 2 | 0.41 | 5.79 | A | Good |
| Example 3 | 0.38 | 6.01 | A | Good |
| Example 4 | 0.35 | 5.79 | A | Good |
| Example 5 | 0.42 | 7.09 | A | Good |
| Example 6 | 0.42 | 8.33 | A | Good |
| Example 7 | 0.42 | 5.98 | A | Good |
| Example 8 | 0.42 | 3.96 | A | Good |
| Example 9 | 0.42 | 4.51 | A | Good |
| Example 10 | 0.39 | 7.09 | A | Good |
| Example 11 | 0.39 | 5.98 | A | Good |
| Example 12 | 0.33 | 5.33 | A | Good |
| Example 13 | 0.32 | 5.33 | A | Good |
| Example 14 | 0.41 | 4.98 | A | Good |
| Example 15 | 0.39 | 4.98 | A | Good |
| Example 16 | 0.41 | 5.18 | A | Good |
| Example 17 | 0.41 | 5.45 | A | Good |
| Example 18 | 0.41 | 5.18 | A | Good |
| Example 19 | 0.50 | 5.07 | A | Good |
| Example 20 | 0.64 | 5.89 | A | Good |
| Example 21 | 0.68 | 5.84 | A | Good |
| Example 22 | 1.14 | 5.12 | A | Good |
| Example 23 | 1.14 | 8.84 | A | Good |
| Example 24 | 1.14 | 5.24 | A | Good |
| Example 25 | 1.14 | 9.32 | A | Good |

[Table 2]

| | Bushing | | Evaluation result | |
|---|---|---|---|---|
| | $X = D1^4/Lt$ | $Y = A3 - (A1 + A2)$ | Productivity of glass fiber | Reduced material usage |
| Example 26 | 1.14 | 8.93 | A | Good |
| Example 27 | 0.91 | 6.92 | A | Good |
| Example 28 | 0.91 | 7.40 | A | Good |
| Example 29 | 1.19 | 7.40 | A | Good |
| Example 30 | 0.98 | 7.40 | A | Good |
| Example 31 | 1.78 | 9.73 | A | Good |
| Example 32 | 1.44 | 8.00 | A | Good |
| Example 33 | 1.33 | 5.80 | A | Good |
| Example 34 | 1.33 | 8.00 | A | Good |
| Example 35 | 1.33 | 9.05 | A | Good |
| Example 36 | 1.33 | 5.25 | A | Good |
| Example 37 | 1.33 | 9.07 | A | Good |
| Example 38 | 1.97 | 9.56 | A | Good |
| Example 39 | 1.48 | 7.04 | A | Good |
| Example 40 | 2.22 | 9.80 | A | Good |
| Example 41 | 1.91 | 7.40 | A | Good |
| Example 42 | 1.79 | 7.40 | A | Good |
| Example 43 | 2.14 | 8.00 | A | Good |
| Example 44 | 2.18 | 7.79 | A | Good |
| Example 45 | 2.66 | 6.74 | A | Good |
| Example 46 | 2.66 | 8.06 | A | Good |
| Example 47 | 2.66 | 10.28 | A | Good |
| Example 48 | 2.66 | 7.53 | A | Good |
| Example 49 | 2.66 | 9.84 | A | Good |
| Example 50 | 2.36 | 8.06 | A | Good |

[Table 3]

| | Bushing | | Evaluation result | |
|---|---|---|---|---|
| | $X = D1^4/Lt$ | $Y = A3 - (A1 + A2)$ | Productivity of glass fiber | Reduced material usage |
| Comparative Example 1 | 0.42 | 9.99 | A | Poor |
| Comparative Example 2 | 0.49 | 2.30 | C | Good |
| Comparative Example 3 | 0.41 | 2.30 | C | Good |
| Comparative Example 4 | 0.41 | 10.85 | A | Poor |
| Comparative Example 5 | 1.14 | 10.24 | A | Poor |
| Comparative Example 6 | 1.14 | 4.04 | C | Good |
| Comparative Example 7 | 1.14 | 10.07 | A | Poor |

(continued)

| | Bushing | | Evaluation result | |
|---|---|---|---|---|
| | $X = D1^4/Lt$ | $Y = A3 - (A1 + A2)$ | Productivity of glass fiber | Reduced material usage |
| Comparative Example 8 | 1.14 | 3.75 | C | Good |
| Comparative Example 9 | 1.33 | 10.49 | A | Poor |
| Comparative Example 10 | 1.33 | 3.05 | C | Good |
| Comparative Example 11 | 1.33 | 11.01 | A | Poor |
| Comparative Example 12 | 1.33 | 4.01 | C | Good |
| Comparative Example 13 | 2.66 | 4.85 | C | Good |
| Comparative Example 14 | 2.66 | 12.65 | A | Poor |
| Comparative Example 15 | 2.66 | 5.40 | C | Good |
| Comparative Example 16 | 2.66 | 12.33 | A | Poor |

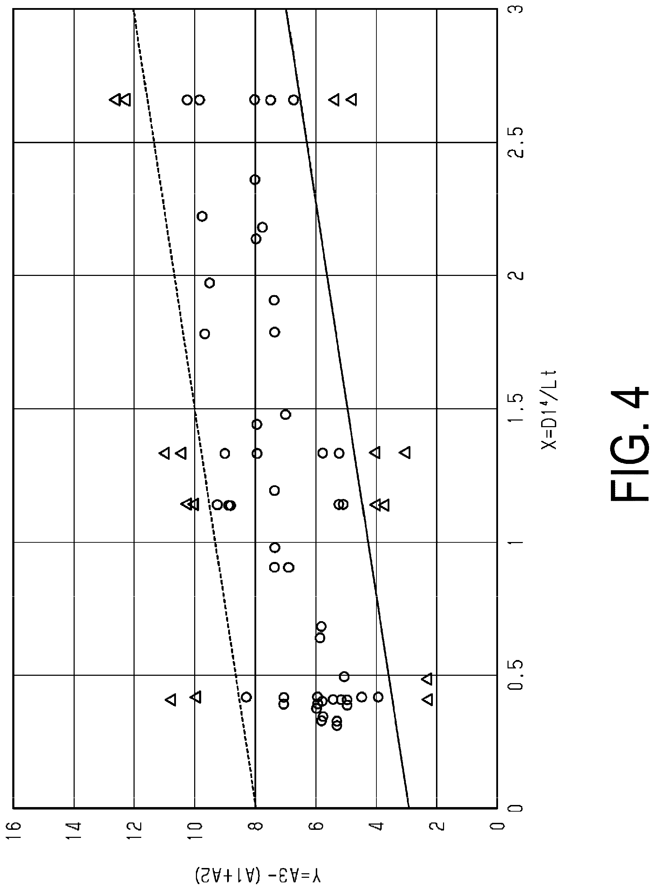

FIG. 4 shows a graph in which the values of X and the values of Y are plotted for the bushings of all examples in Tables 1 to 3. In this graph, the bushings of Examples 1 to 50 are indicated by "circles", and the bushings of Comparative Examples 1 to 16 are indicated by "triangles". In this graph, the straight line of the foregoing relation (2) is indicated by a solid line, and the straight line of the foregoing relation (3) is indicated by a dashed line. From this graph, it can be seen that the bushings of Examples 1 to 50 have configurations that fall within the range represented by the foregoing relation (1). On the other hand, it can be seen that the bushings of Comparative Examples 1 to 16 have configurations that fall outside the range represented by the foregoing relation (1).

The bushings of Examples 1 to 50 were evaluated to have high productivity of the glass fiber. On the other hand, the bushings of Comparative Examples 2, 3, 6, 8, 10, 12, 13, and 15 were evaluated to have low productivity of the glass fiber. The bushings of Comparative Examples 1, 4, 5, 7, 9, 11, 14, and 16 cannot suitably reduce the amount of the material used for the base plate because the space around the nozzle is excessively large for the outlet velocity of the molten glass flowing out from the nozzle.

Reference Signs List

11 Bushing
11b Base plate
11b1 Bottom surface
A1 Nozzle hole cross-sectional area
A2 Nozzle wall cross-sectional area
A3 Nozzle arrangement area
CA Cake
D1 Nozzle hole inner diameter
GF Glass filament
GS Glass strand
Lt Nozzle flow path length
L1 Interval between centers of adjacent nozzles in first nozzle row or second nozzle row
L2 Interval between centers of first nozzle and second nozzle adjacent to each other
MG Molten glass
N Nozzle
N1 First nozzle
N2 Second nozzle
Ns Inner surface
R1 First nozzle row
R2 Second nozzle row

**Claims**

1. A bushing comprising:

   a base plate; and
   a nozzle group provided at a bottom surface of the base plate, wherein
   the nozzle group includes
   a first nozzle row in which a plurality of first nozzles are aligned, and
   a second nozzle row in which a plurality of second nozzles are aligned, the second nozzle row being arranged adjacent to the first nozzle row, and
   the bushing is configured to satisfy the following relations (1) to (6):

$$y1 \leq Y \leq y2 \quad (1)$$

$$y1 = 4/3 \times X + 3 \quad (2)$$

$$y2 = 4/3 \times X + 8 \quad (3)$$

$$X = D1^4/Lt \quad (4)$$

$$Y = A3 - (A1 + A2) \quad (5)$$

$$A3 = L1 \times L2 \quad (6)$$

   where, for each of the plurality of first nozzles and the plurality of second nozzles, $D1$ is a nozzle hole inner diameter [mm], $Lt$ is a nozzle flow path length [mm], $A1$ is a nozzle hole cross-sectional area [mm$^2$], and $A2$ is a nozzle wall cross-sectional area [mm$^2$],
   $L1$ is an interval [mm] between the centers of adjacent first nozzles in the first nozzle row and an interval [mm] between the centers of adjacent second nozzles in the second nozzle row, and
   $L2$ is an interval [mm] between the center of the first nozzle row in a row width direction and the center of the second nozzle row in the row width direction.

2. The bushing according to claim 1, wherein the bushing configured to further satisfy the following relation (7):

$$0.2 \leq X \leq 3.0. \quad (7)$$

3. The bushing according to claim 1 or 2, wherein a mean value of arithmetic mean roughnesses Ra at an inner surface of a nozzle hole of each of the plurality of first nozzles and the plurality of second nozzles is 2 $\mu$m or less.

4. A method for producing glass fiber, the method comprising:

   supplying molten glass to a bushing;
   drawing out a plurality of glass filaments from the bushing; and then
   gathering the plurality of glass filaments into a strand, wherein
   the bushing includes
   a base plate and
   a nozzle group provided at a bottom surface of the base plate,
   the nozzle group includes
   a first nozzle row in which a plurality of first nozzles are aligned, and
   a second nozzle row in which a plurality of second nozzles are aligned, the second nozzle row being arranged adjacent to the first nozzle row, and

the foregoing relations (1) to (6) are satisfied:

$$y1 \leq Y \leq y2 \quad \cdots (1)$$

$$y1 = 4/3 \times X + 3 \quad \cdots (2)$$

$$y2 = 4/3 \times X + 8 \quad \cdots (3)$$

$$X = D1^4/Lt \quad \cdots (4)$$

$$Y = A3 - (A1 + A2) \quad \cdots (5)$$

$$A3 = L1 \times L2 \quad \cdots (6)$$

where, for each of the plurality of first nozzles and the plurality of second nozzles, D1 is a nozzle hole inner diameter [mm], Lt is a nozzle flow path length [mm], A1 is a nozzle hole cross-sectional area [mm$^2$], and A2 is a nozzle wall cross-sectional area [mm$^2$],

L1 is an interval [mm] between the centers of adjacent first nozzles in the first nozzle row and an interval [mm] between the centers of adjacent second nozzles in the second nozzle row, and

L2 is an interval [mm] between the center of the first nozzle row in a row width direction and the center of the second nozzle row in the row width direction.

FIG. 1

FIG. 2

FIG. 3

FIG. 4

## INTERNATIONAL SEARCH REPORT

| International application No. |
|---|
| **PCT/JP2021/037804** |

**A. CLASSIFICATION OF SUBJECT MATTER**

*C03B 37/083*(2006.01)i; *D01D 4/02*(2006.01)i
FI: C03B37/083; D01D4/02

According to International Patent Classification (IPC) or to both national classification and IPC

**B. FIELDS SEARCHED**

Minimum documentation searched (classification system followed by classification symbols)

C03B37/08; C03B37/083; D01D4/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 60-141638 A (TANAKA KIKINZOKU KOGYO KK) 26 July 1985 (1985-07-26) example 1, fig. 3(a), (b) | 1, 2, 4 |
| Y | | 3 |
| X | JP 57-082138 A (NITTO BOSEKI KK) 22 May 1982 (1982-05-22) example 2, fig. 1, 2 | 1, 2, 4 |
| Y | | 3 |
| Y | JP 2019-108262 A (NIPPON ELECTRIC GLASS CO) 04 July 2019 (2019-07-04) claims, paragraph [0008] | 3 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 December 2021** | **28 December 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/037804**

| Patent document cited in search report | | | Publication date (day/month/year) | Patent family member(s) | | | Publication date (day/month/year) |
|---|---|---|---|---|---|---|---|
| JP | 60-141638 | A | 26 July 1985 | (Family: none) | | | |
| JP | 57-082138 | A | 22 May 1982 | EP | 52007 | A1 | |
| | | | | example 2, fig. 1-2 | | | |
| | | | | BE | 891070 | A | |
| | | | | NO | 813824 | L | |
| | | | | ES | 506972 | A | |
| | | | | FI | 813547 | A | |
| | | | | BR | 8107319 | A | |
| | | | | IN | 156008 | A | |
| | | | | ZA | 8107653 | A | |
| | | | | AU | 7711281 | A | |
| | | | | KR | 10-1983-0007451 | A | |
| | | | | IN | 156008 | B | |
| | | | | ZA | 817653 | B | |
| JP | 2019-108262 | A | 04 July 2019 | (Family: none) | | | |

Form PCT/ISA/210 (patent family annex) (January 2015)

**EP 4 230 592 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015231926 A